# EUROPEAN PATENT SPECIFICATION

(11) **EP 4 686 839 B1**
(45) Date of publication and mention of the grant of the patent: **12.08.2026**
(21) Application number: 25188712.1
(22) Date of filing: 10.07.2025
(51) Int. Cl.: F16B 12/20

(54) **IMPROVED FASTENING DEVICE BETWEEN PANELS AND/OR SHELVES OF FURNITURE BY COMPLEMENTARY SPIRALS**
VERBESSERTE BEFESTIGUNGSVORRICHTUNG ZWISCHEN MÖBELPLATTEN UND/ODER MÖBELREGALEN MIT KOMPLEMENTÄREN SPIRALEN
DISPOSITIF DE FIXATION AMÉLIORÉ ENTRE DES PANNEAUX ET/OU DES ÉTAGÈRES DE MEUBLE PAR DES SPIRALES COMPLÉMENTAIRES

(30) Priority: 01.08.2024 ES 202431480 U
(43) Date of publication of application: 04.02.2026
(73) Proprietor: Industrias Auxiliares, S.A., 20808 Getaria Gipuzkoa (ES)
(72) Inventor: Lerchundi Iturain, Isidro, 20808 Getaria (ES)
(74) Representative: Izquierdo Blanco, Maria Alicia

(56) References cited:
- EP-A1- 2 525 105
- EP-A2- 1 455 096

## Description

### Field of the invention

This invention concerns a device intended for fastening between panels and/or shelves for the assembly of furniture structures. It pertains to a type whose general construction comprises a cylindrical body that is fitted into the bottom of a blind hole made on one face of a panel or shelf and near the edge intended to be joined to a second panel or shelf. This cylindrical body incorporates progressive-action rotary coupling means that operate in conjunction with an pin head having a special configuration and belonging to a pin that is fixed in the second panel or shelf.

### State of the prior art

In this field, there are known configurations, such as that described in patent EP 1455096 A2, in which the rotary coupling means consist of the cylindrical body forming a spiral groove through two discs with identical facing spiral threads, in which the pin head with several fins is operatively positioned to engage between the spiral threads. The pin is anchored in another panel or shelf intended to be fastened to the one in which the cylindrical body is installed. In this way, when the cylindrical body is rotated during the fastening maneuver, a pulling force is exerted on the pin head, resulting in a progressive bringing together of the panels or shelves in question until they are joined in the correct assembly position.

This type of configuration presents the drawback that the entry of the pin into the groove and its subsequent rotational approach are affected by the friction between the fins of the pin head and the spiral threads on both discs. Moreover, for low-load products, this configuration results in excessive thicknesses in the discs, and the formation of two identical threads increases the manufacturing cost of the fastening element.

Patent EP 2525105 A1 describes a partial solution to the problem by configuring the spirals in semicircular sections with an opening at the entrance of the pin into the slot, facilitating approximation and entry, but they do not solve the subsequent rotational approximation or the friction between the fins of the pin head and the spiral threads of both discs.

There are known configurations that include reinforcement ribs on their outer surface which also serve as support elements for tightening the device, but the design of the reinforcement ribs prevents the use of tightening tools.

Another known configuration includes rotary coupling means where the cylindrical body forms a spiral groove through two discs, one of which has interrupted spiral threads, in which the pin head with multiple fins is operatively positioned. However, this arrangement is complicated due to its semi-spiral structure and also produces an imbalanced pull by acting only from one of the discs.

There are configurations that reduce the number of effective spiral turns to prioritize quick assembly, but decreasing the number of turns limits the fastening through the spiral threads to a single pin fin. Several spiral turns are necessary to contain multiple fins of the pin within them. This reduction in fastening increases the risk of excessive fastening tension due to vibrations and impacts during furniture transport or regular use, as the entire tension is borne by a single fin. Additionally, if the complete joining/approach of the panels and/or shelves is not possible due to minor manufacturing defects causing irregularities on the joining surface, effective fastening does not occur because the sole supporting fin does not enter the final spiral section in which it must be contained.

### Explanation of the invention and advantages

In response to this situation, the present invention refers to an improved fastening device according to claim 1.

Thanks to this configuration, the fastening security of a device with an operational length of 1.75 turns is combined, ensuring engagement of at least one disc-shaped fin between the spiral threads of one face during the first 1.75 turns and of both faces in the final ¾-turn section. This ensures retention and reduces the activation effort of the improved fastening device compared to the prior art that uses two discs with complementary but not identical spirals. It reduces friction by limiting the first entry turn to the inner disc and the final ¾ remaining turn to both surfaces, requiring 1.75 turns to reach the retention section for correct fastening. This results in a smooth yet robust progressive fastening. Additionally, the entry positioning stop ensures perfect and easy alignment of the pin head, positioning the disc-shaped fins between the spiral threads and ensuring their entry for fastening.

Moreover, the entry positioning stop of the outer disc aligns during assembly with the entry point of the inner spiral threads, and the retention section of the outer disc aligns during assembly with the end of the inner spiral threads.

This alignment allows the formation of an entry groove between the entry of the inner spiral threads and the retention section of the outer disc, and a tightening groove between the facing crests of the inner and outer spiral threads in the final section of the inner spiral threads. As the tightening occurs over a ¾-turn length, in the case that the surfaces of the panels and/or shelves to be fastened present minor manufacturing defects causing irregularities on the joining surface, the fastening of the support is still guaranteed by the engagement of at least two disc-shaped fins between the spiral threads simultaneously, even without ideal surface contact (in ideal surface contact, the outermost disc-shaped fin of the pin head would reach the end of the spiral near the centre), allowing for slight play.

Regarding the outer disc, on its outer face, an indicator is incorporated showing the start of the spiral threads at the point closest to the periphery of the inner and outer discs.

Thanks to this indicator, it is possible to orient the fastening device in the direction of the pin's entry during its assembly, facilitating the task of the operator when fitting the cylindrical body into the bottom of a blind hole, since only the outer face of the outer disc is visible inside the blind hole.

The inner disc has a convex-angled recess on its outer surface. This convex angle, in addition to contributing to material reduction of the element-which represents significant savings in its manufacturing-allows a perfect fit into the blind hole made in the panel or shelf, even when there are slight irregularities at the bottom of the hole due to burrs inherent to the material during drilling or bulging.

In addition, the outer disc consists of a cylindrical hub that projects axially and steps down in size to extend into a hollow polygonal hub whose contour and length match and link with the polygonal hole arranged at the centre of the inner disc.

Thanks to this configuration, it is possible to join both discs, with this union being fixable by riveting or any other joining means, while maintaining a predetermined distance between the crests of the spiral threads that allow the passage of the smaller diameter of the disc-shaped fins of the head of the pin.

Furthermore, the outer disc has an axially blind polygonal recess whose edges house, radially, the reinforcement ribs on the outer face of the outer disc.

This configuration of the reinforcement ribs allows the cylindrical body to be manipulated either manually by finger support on the reinforcement ribs or by tools on the flat faces of the blind polygonal recess, which are accessible without interference from the reinforcement ribs.

### Drawings and References

To better understand the nature of the invention, the attached drawings represent an industrial embodiment that is purely illustrative and not limiting in nature.

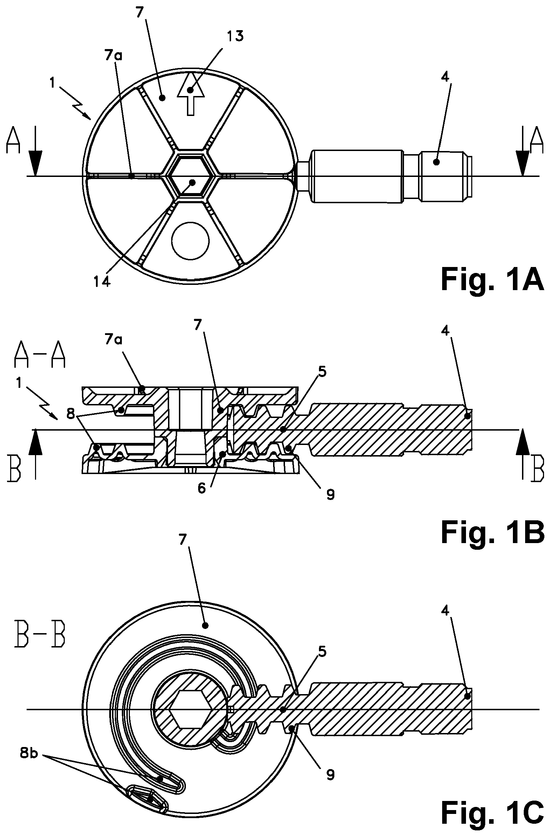

Figure 1A shows the cylindrical body (1) with the pin (4) inserted (fastening position), in which the outer face of the outer disc (7) is visible, showing the indicator (13) and the reinforcement ribs (7a). Figure 1B shows the section of the figure represented in Figure 1A along axis A-A, where the arrangement of the disc-shaped fins (9) on the pin head (5) and the configuration of the cylindrical body (1) from the union between the inner disc (6) and the outer disc (7), which have spiral threads (8) on their inner faces, can be seen. Figure 1C shows the section of the figure represented in Figure 1B along axis B-B, in which the inner face of the outer disc (7) is shown in connection with the pin (4), showing the outer spiral threads (8b) engaged between the disc-shaped fins (9) of the head pin (5).

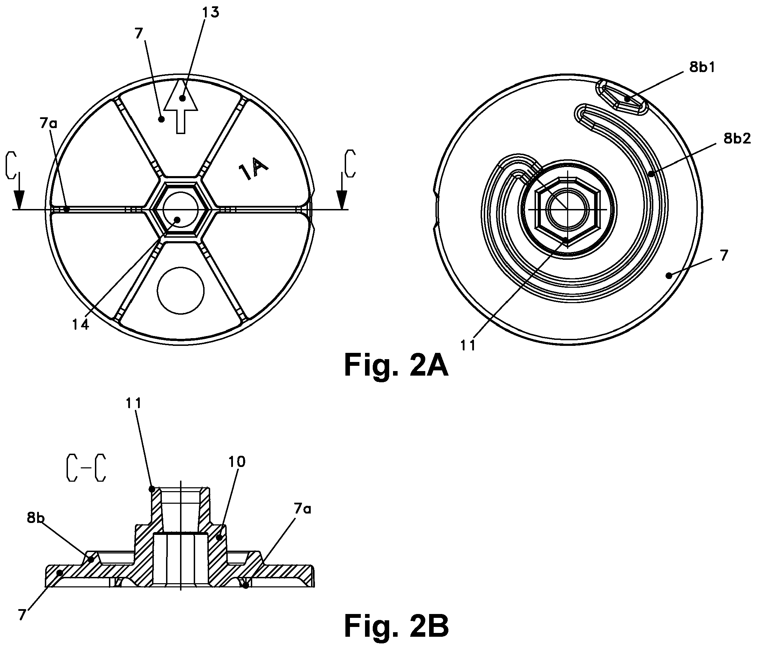

Figure 2A shows the inner and outer surfaces of the outer disc of the cylindrical body (7), showing on its outer face the indicator (13) and the reinforcement ribs (7a), and on its inner face the entry positioning stop (8b1) and the retention section (8b2). Figure 2B shows the section of the figure represented in Figure 2A along axis C-C, where the outer spiral threads (8b), the cylindrical hub (10), and the polygonal hub (11) of the outer disc (7) can be seen.

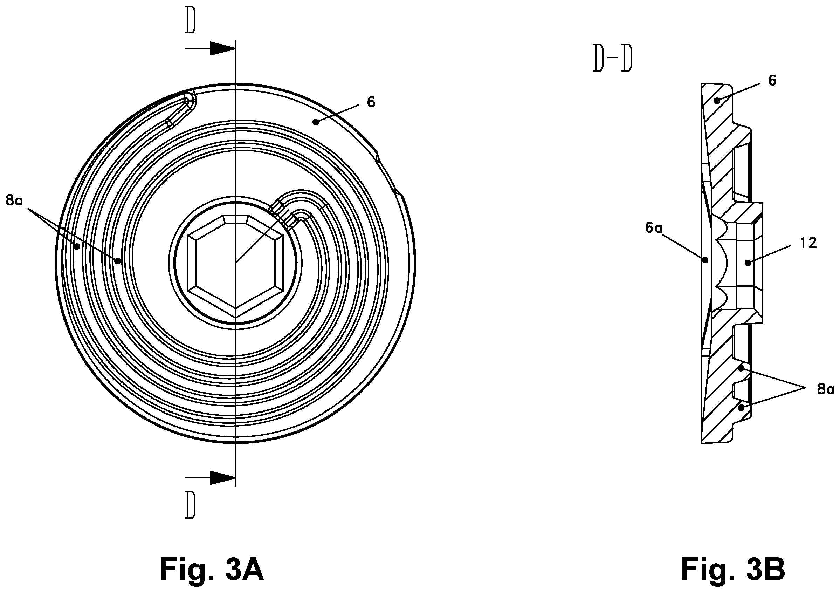

Figure 3A shows the inner surface in assembly of the inner disc (6) of the cylindrical body (1), where the inner spiral threads (8a) are visible. Figure 3B shows the section of the figure represented in Figure 3A along axis D-D, showing the configuration of the convex-angled recess (6a) and the polygonal hole (12).

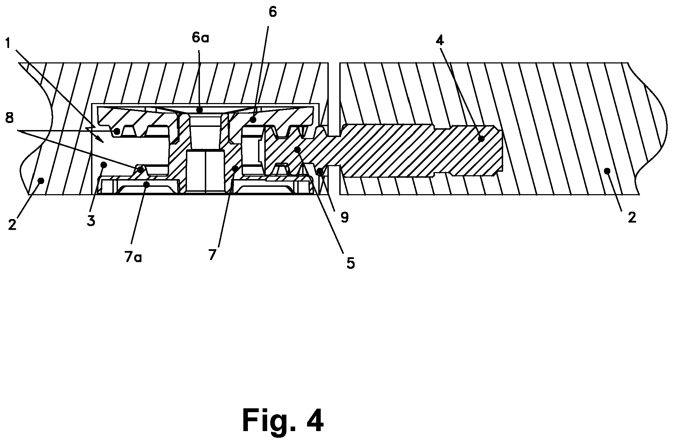

Figure 4 shows the cylindrical body (1) and the pin (4) mounted on respective panels or shelves (2), with the cylindrical body (1) formed by the inner disc (6) and the outer disc (7) inside the blind hole (3). The figures show the spiral threads (8), the reinforcement ribs (7a) of the outer disc (7), the convex-angled recess (6a) of the inner disc (6), and the disc-shaped fins (9) of the pin head (5).

In these figures, the following references are indicated:
1.- Cylindrical body
2.- Panel or shelf
3.- Blind hole
4.- Pin
5.- Pin head
6.- Inner disc
   6a. Convex-angled recess
7.- Outer disc
   7a. Reinforcement ribs
8.- Spiral threads
   8a. Inner spiral threads
   8b. Outer spiral threads
      8b1. Entry positioning stop
      8b2. Retention section
9.- Disc-shaped fins
10.- Cylindrical hub
11.- Polygonal hub
12.- Polygonal hole
13.- Indicator
14.- Blind polygonal recess

### Description of a Preferred Embodiment

In relation to the above-listed drawings and references, the attached diagrams illustrate a preferred embodiment of the object of the invention, referring to an improved fastening device between panels and/or shelves of furniture by complementary spirals. It comprises a cylindrical body (1) that is fitted into the bottom of a blind hole (3) made on one face of a panel or shelf (2) and near the edge, formed by two discs that, in relation to their depth of placement in said blind hole (3), are referred to as the inner disc (6) and the outer disc (7), intended to be joined to a second panel or shelf (2), whose cylindrical body (1) incorporates progressive-action rotary engagement means that operate in conjunction with an pin head (5) made up of disc-shaped fins (9), preferably three in number, though they may vary in number but are in plurality. These fins have an outer diameter that is both greater than the distance between the opposed crests of the spiral threads (8) of the inner disc (6) and outer disc (7), and smaller than the distance between the roots of these spiral threads (8), while the smaller diameter of these disc-shaped fins (9) is less than said distance between the opposed crests of the spiral threads (8), and they belong to a pin (4) that is fixed to the second panel or shelf (2). The inner disc (6) is provided with inner spiral threads (8a), which preferably have an operational length of one and three-quarter turns, and the outer disc (7) is provided with outer spiral threads (8b), consisting of an entry positioning stop (8b1) and a preferred retention section (8b2) of ¾ of a turn.

To fasten two panels or shelves (2), the cylindrical body (1) is fitted into the bottom of a blind hole (3) made on one side of a panel or shelf (2), near the edge, and is linked to a pin (4) that is fixed in the second panel or shelf (2), with the pin head (5) protruding from the side intended to be joined. This linkage is carried out by inserting the pin head (5), which is provided with disc-shaped fins (9), preferably three in number, between the inner disc (6) and the outer disc (7). As the cylindrical body (1) rotates, thanks to the traction exerted on the disc-shaped fins (9), which are positioned between the peaks of the inner spiral threads (8a) and the outer spiral threads (8b), the pin (4) moves, bringing the end of the pin head (5) closer to the centre of the cylindrical body (1), thereby bringing together the sides of the two panels or shelves (2) to be fastened.

Thanks to this configuration, as shown in figure 1B, on the one hand, fastening safety is achieved with a device that has an operational length of one and three-quarters turns, ensuring that at least two disc-shaped fins (9) are engaged between the spiral threads, with at least one disc-shaped fin (9) contained between the inner spiral threads (8a) and the outer spiral threads (8b), and at least one other disc-shaped fin (9) simultaneously engaged between the inner spiral threads (8a). On the other hand, as shown in figure 1C, the actuation effort of the improved fastening device is reduced compared to previous technology using two discs with complementary but not identical spirals-inner disc (6) and outer disc (7)-by reducing friction: limiting the first entry turn to the inner spiral thread (8a) and the last ¾ turn to both surfaces, the inner spiral thread (8a) and the retention section (8b2), resulting in smooth progressiveness, which is very useful in the case of cabinets with light loads over the preferred operational length of one and three-quarters turns. Furthermore, the entry positioning stop (8b1) ensures the perfect and easy guiding of the pin head (5), positioning the disc-shaped fins (9) between the inner spiral threads (8a) and the entry positioning stop (8b1).

In addition, the entry positioning stop (8b1) of the outer disc (7) coincides, in assembly, with the entry of the inner spiral threads (8a) of the inner disc (6), and the retention section (8b2) of the outer disc (7) coincides, in assembly, with the end of the inner spiral threads (8a) of the inner disc (6).

This alignment allows for the formation of an entry between the inner spiral threads (8a) and the entry positioning stop (8b1), and a retention zone between the facing peaks of the inner spiral threads (8a) and the retention section (8b2). As the retention occurs over a ¾ turn length, corresponding to the retention section (8b2), in cases where the surfaces of the panels and/or shelves (2) to be fastened present small manufacturing defects resulting in surface irregularities, the fastening of the support is still ensured by engaging at least two disc-shaped fins (9) between the spiral threads simultaneously, even without achieving ideal contact between the surfaces (in ideal contact, the outermost disc-shaped fin (9) of the pin head (5) would reach the end of the spiral, near the centre), allowing for slight clearance.

Regarding the outer face of the outer disc (7), an indicator (13) of the start of the spiral threads (8) is incorporated at the point closest to the periphery of the inner disc (6) and outer disc (7).

This indicator (13) makes it possible to orient the fastening device in the direction of the pin's (4) entry during assembly, facilitating the operator's task of fitting the cylindrical body (1) into the bottom of a blind hole (3), as only the outer face of the outer disc (7) is visible inside the blind hole (3).

Regarding the inner disc (6), it has a convex-angled recess (6a) on its outer surface.

This convex angle recess (6a), besides contributing to a reduction in material used for the part-significantly lowering costs-allows for a perfect fit into the blind hole (3) made in the panel or shelf (2), even when small irregularities are present at the bottom of the blind hole (3) due to burrs from the drilling process, bulging due to moisture, etc.

The outer disc (7) also consists of a cylindrical hub (10) that protrudes axially and steps down to extend via a polygonal hub (11), which is hollow, with its contour and length matching and linked to the polygonal hole (12) located at the centre of the inner disc (6).

Thanks to this configuration, the inner disc (6) and outer disc (7) can be joined, and this union can be fixed by riveting or any other joining technique, while maintaining a predetermined distance between the peaks of the inner spiral threads (8a) and the outer spiral threads (8b), which allows the smaller diameter of the disc-shaped fins (9) on the pin head (5) to pass between the spiral threads.

Additionally, the outer disc (7) has an axial blind polygonal recess (14) whose edges radially accommodate the reinforcement ribs (7a) on the outer face of the outer disc (7).

This configuration of the reinforcement ribs (7a) allows the cylindrical body (1) to be manipulated once inserted into the blind hole (3) for rotation, either manually, by supporting the fingers on the reinforcement ribs (7a), or using tools such as pliers on the flat surfaces of the blind polygonal recess (14), which can be accessed without interference thanks to the radial position of the reinforcement ribs (7a).

## Claims

1. Improved fastening device between furniture panels and/or shelves (2) using complementary spirals, comprising a cylindrical body (1) that can be fitted into the bottom of a blind hole (3) made on one face of a panel or shelf (2), near the edge, the cylindrical body (1) being formed by two discs which, depending on their more or less deep location within said blind hole (3), are referred to as inner disc (6) and outer disc (7), and incorporating the cylindrical body (1) progressive-action rotary engagement means in the form of spiral threads (8) that operate in conjunction with a pin head (5) of a pin (4) of the improved fastening device that can fixed in a second panel or shelf (2), formed by disc-shaped fins (9), preferably three in number, which have an outer diameter that is greater than the distance between the opposing crests of the spiral threads (8) of the inner (6) and outer (7) discs, and less than the distance between the roots of said spiral threads (8), while the smaller diameter of these disc-shaped fins (9) is less than said distance between the opposing crests of the spiral threads (8), **characterised in that** the inner disc (6) is provided with inner disc spiral threads (8a) having an operational length of one and three-quarters turns, and the outer disc (7) is provided with outer spiral threads (8b) consisting of an entry positioning stop (8b1) and a retention section (8b2) of ¾ of a turn.

2. Improved fastening device between furniture panels and/or shelves using complementary spirals, according to the previous claim, **characterised in that** the entry positioning stop (8b1) of the outer disc (7) is aligned, during assembly, with the entry of the inner disc spiral threads (8a) of the inner disc (6), and the retention section (8b2) of the outer disc (7) is aligned, during assembly, with an end of the inner spiral threads (8a) of the inner disc (6).

3. Improved fastening device between furniture panels and/or shelves using complementary spirals, according to the previous claims, **characterised in that** an indicator (13) of the start of the spiral threads (8) is incorporated on the outer face of the outer disc (7), at the point closest to the periphery of the inner disc (6) and outer disc (7).

4. Improved fastening device between furniture panels and/or shelves using complementary spirals, according to the previous claims, **characterised in that** the inner disc (6) features a convex-angled recess (6a) on its outer surface.

5. Improved fastening device between furniture panels and/or shelves using complementary spirals, according to the previous claims, **characterised in that** the outer disc (7) consists of a cylindrical hub (10) that axially protrudes and steps down to continue into a polygonal hub (11), which is hollow, with its contour and length matching and connected with the polygonal hole (12) located at the centre of the inner disc (6).

6. Improved fastening device between furniture panels and/or shelves using complementary spirals, according to the previous claims, **characterised in that** the outer disc (7) has an axially blind polygonal recess (14), on the edges of which are radially located reinforcement ribs (7a) on the outer face of the outer disc (7).

## Patentansprüche

1. Verbesserte Befestigungsvorrichtung zwischen Möbelplatten und/oder Regalböden (2) unter Verwendung komplementärer Spiralen, umfassend einen zylindrischen Körper (1), der in den Boden einer Sackbohrung (3) eingesetzt werden kann, die auf einer Fläche einer Möbelplatte oder eines Regalbodens (2) nahe der Kante angebracht ist, wobei der zylindrische Körper (1) aus zwei Scheiben gebildet ist, die abhängig von ihrer mehr oder weniger tiefen Lage innerhalb der genannten Sackbohrung (3) als innere Scheibe (6) und äußere Scheibe (7) bezeichnet werden, und wobei der zylindische Körper (1) Drehverbindungsmittel mit progressiver Wirkung in Form von Spiralgewinden (8) aufweist, die mit einem Stiftkopf (5) eines Stiftes (4) der verbesserten Befestigungsvorrichtung zusammenwirken, der in einer zweiten Möbelplatte oder einem zweiten Regalboden (2) befestigt werden kann, wobei die Drehverbindungsmittel mit progressiver Wirkung durch scheibenförmige Flügel (9), vorzugsweise drei an der Zahl, gebildet werden, die einen Außendurchmesser aufweisen, der größer ist als der Abstand zwischen den gegenüberliegenden Gewindespitzen der Spiralgewinde (8) der inneren Scheibe (6) und der äußeren Scheibe (7), und kleiner ist als der Abstand zwischen den Gewindegründen der genannten Spiralgewinde (8), während der kleinere Durchmesser der scheibenförmigen Flügel (9) kleiner ist als der genannte Abstand zwischen den gegenüberliegenden Gewindespitzen der Spiralgewinde (8), **dadurch gekennzeichnet, dass** die innere Scheibe (6) mit Spiralgewinden der inneren Scheibe (8a) versehen ist, die eine wirksame Länge von einer Dreiviertelumdrehung und einer ganzen Umdrehung aufweisen, und die äußere Scheibe (7) mit äußeren Spiralgewinden (8b) versehen ist, die aus einem Eintrittspositionierungsanschlag (8b1) und einem Halteabschnitt (8b2) von drei Vierteln einer Umdrehung bestehen.

2. Verbesserte Befestigungsvorrichtung zwischen Möbelplatten und/oder Regalböden unter Verwendung komplementärer Spiralen nach Anspruch 1, **dadurch gekennzeichnet, dass** der Eintrittspositionierungsanschlag (8b1) der äußeren Scheibe (7) während der Montage mit dem Eintritt der Spiralgewinde der inneren Scheibe (8a) der inneren Scheibe (6) ausgerichtet ist und der Halteabschnitt (8b2) der äußeren Scheibe (7) während der Montage mit einem Ende der Spiralgewinde der inneren Scheibe (8a) der inneren Scheibe (6) ausgerichtet ist.

3. Verbesserte Befestigungsvorrichtung zwischen Möbelplatten und/oder Regalböden unter Verwendung komplementärer Spiralen nach den vorhergehenden Ansprüchen, **dadurch gekennzeichnet, dass** ein Indikator (13) für den Beginn der Spiralgewinde (8) auf der Außenfläche der äußeren Scheibe (7) an dem Punkt angebracht ist, der der Peripherie der inneren Scheibe (6) und der äußeren Scheibe (7) am nächsten liegt.

4. Verbesserte Befestigungsvorrichtung zwischen Möbelplatten und/oder Regalböden unter Verwendung komplementärer Spiralen nach den vorhergehenden Ansprüchen, **dadurch gekennzeichnet, dass** die innere Scheibe (6) auf ihrer Außenfläche eine Ausnehmung mit konvexem Winkel (6a) aufweist.

5. Verbesserte Befestigungsvorrichtung zwischen Möbelplatten und/oder Regalböden unter Verwendung komplementärer Spiralen nach den vorhergehenden Ansprüchen, **dadurch gekennzeichnet, dass** die äußere Scheibe (7) aus einer zylindrischen Nabe (10) besteht, die axial hervorsteht und stufenförmig reduziert ist, um in eine polygonale Nabe (11) überzugehen, die hohl ist und deren Kontur und Länge mit der polygonalen Bohrung (12) übereinstimmen, die sich im Zentrum der inneren Scheibe (6) befindet, und mit der polygonalen Bohrung (12) verbunden ist.

6. Verbesserte Befestigungsvorrichtung zwischen Möbelplatten und/oder Regalböden unter Verwendung komplementärer Spiralen nach den vorhergehenden Ansprüchen, **dadurch gekennzeichnet, dass** die äußere Scheibe (7) eine axial blinde polygonale Ausnehmung (14) aufweist, an deren Rändern auf der Außenfläche der äußeren Scheibe (7) radial angeordnete Verstärkungsrippen (7a) vorgesehen sind.

## Revendications

1. Dispositif de fixation amélioré entre panneaux et/ou étagères de mobilier (2) au moyen de spirales complémentaires, comprenant un corps cylindrique (1) pouvant être logé au fond d'un trou borgne (3) pratiqué sur une face d'un panneau ou d'une étagère (2), à proximité du bord, le corps cylindrique (1) étant formé de deux disques qui, selon leur position plus ou moins profonde à l'intérieur dudit trou borgne (3), sont dénommés disque intérieur (6) et disque extérieur (7), et le corps cylindrique (1) incorporant des moyens d'engagement rotatif à action progressive sous forme de filetages hélicoïdaux (8) qui coopèrent avec une tête de goujon (5) d'un goujon (4) du dispositif de fixation amélioré pouvant être fixé dans un second panneau ou une seconde étagère (2), les moyens d'engagement rotatif à action progressive étant formés par des ailettes en forme de disque (9), de préférence au nombre de trois, présentant un diamètre extérieur supérieur à la distance entre les crêtes opposées des filetages hélicoïdaux (8) des disques intérieur (6) et extérieur (7), et inférieur à la distance entre les fonds desdits filetages hélicoïdaux (8), tandis que le diamètre intérieur desdites ailettes en forme de disque (9) est inférieur à ladite distance entre les crêtes opposées des filetages hélicoïdaux (8), **caractérisé en ce que** le disque intérieur (6) est pourvu de filetages hélicoïdaux du disque intérieur (8a) ayant une longueur opérationnelle d'un tour et trois quarts, et le disque extérieur (7) est pourvu de filetages hélicoïdaux extérieurs (8b) constitués d'une butée de positionnement d'entrée (8b1) et d'une section de retenue (8b2) de trois quarts de tour.

2. Dispositif de fixation amélioré entre panneaux et/ou étagères de mobilier au moyen de spirales complémentaires, selon la revendication précédente, **caractérisé en ce que** la butée de positionnement d'entrée (8b1) du disque extérieur (7) est alignée, lors du montage, avec l'entrée des filetages hélicoïdaux du disque intérieur (8a) du disque intérieur (6), et la section de retenue (8b2) du disque extérieur (7) est alignée, lors du montage, avec une extrémité des filetages hélicoïdaux intérieurs (8a) du disque intérieur (6).

3. Dispositif de fixation amélioré entre panneaux et/ou étagères de mobilier au moyen de spirales complémentaires, selon les revendications précédentes, **caractérisé en ce qu'**un indicateur (13) du début des filetages hélicoïdaux (8) est incorporé sur la face extérieure du disque extérieur (7), au point le plus proche de la périphérie du disque intérieur (6) et du disque extérieur (7).

4. Dispositif de fixation amélioré entre panneaux et/ou étagères de mobilier au moyen de spirales complémentaires, selon les revendications précédentes, **caractérisé en ce que** le disque intérieur (6) comporte un évidement à angle convexe (6a) sur sa surface extérieure.

5. Dispositif de fixation amélioré entre panneaux et/ou étagères de mobilier au moyen de spirales complémentaires, selon les revendications précédentes, **caractérisé en ce que** le disque extérieur (7) est constitué d'un moyeu cylindrique (10) faisant saillie axialement et présentant un rétrécissement en gradin pour se prolonger par un moyeu polygonal (11), creux, dont le contour et la longueur correspondent à ceux du trou polygonal (12) situé au centre du disque intérieur (6) et raccordé audit trou polygonal.

6. Dispositif de fixation amélioré entre panneaux et/ou étagères de mobilier au moyen de spirales complémentaires, selon les revendications précédentes, **caractérisé en ce que** le disque extérieur (7) présente un évidement polygonal borgne axial (14), sur les bords duquel sont disposées radialement des nervures de renforcement (7a) sur la face extérieure du disque extérieur (7).
